# NEUE EUROPÄISCHE PATENTSCHRIFT

(11) **EP 2 771 147 B2**
(45) Veröffentlichungstag und Bekanntmachung des Hinweises auf die Entscheidung über den Einspruch: **15.01.2020**
(45) Hinweis auf die Patenterteilung: 13.01.2016
(21) Anmeldenummer: 12784454.6
(22) Anmeldetag: 25.10.2012
(51) Int. Cl.: B23K 26/08, B23K 31/02, B23K 26/36, B23B 27/00, B23B 51/00

(54) **VERFAHREN ZUM HERSTELLEN EINER FÜHRUNGSFASE AN EINEM WERKSTÜCK, INSBESONDERE AN EINEM SCHNEIDENDEN WERKZEUG, UNTER VERWENDUNG CNC GESTEUERTER LASER-UND AUFSPANNEVORRICHTUNGEN**
METHOD OF PRODUCING A GUIDE BEVEL ON A WORKPIECE, IN PARTICULAR ON A CUTTING TOOL, USING CNC-CONTROLLED LASER AND CLAMPING DEVICES
PROCÉDÉ POUR PRODUIRE UN CHANFREIN DE GUIDAGE SUR UNE PIÈCE, EN PARTICULIER UN OUTIL DE COUPAGE, UTILISANT UN LASER CONTROLÉ PAR CNC ET DES OUTILLAGES DE SERRAGE

(30) Priorität: 26.10.2011 DE 102011116974
(43) Veröffentlichungstag der Anmeldung: 03.09.2014
(73) Patentinhaber: VOLLMER WERKE Maschinenfabrik GmbH, 88400 Biberach/Riss (DE)
(72) Erfinder: SAEGMUELLER, Manfred, 88444 Ummendorf (DE); HAUGER, Arndt, 72175 Dornhan-Weiden (DE)
(74) Vertreter: Thum, Bernhard
(86) Internationale Anmeldenummer: PCT/EP2012/004471
(87) Internationale Veröffentlichungsnummer: WO 2013/060461

(56) Entgegenhaltungen:
- DE-A1- 19 901 530
- DE-A1-102010 011 508
- JP-A- 2009 006 436
- US-A- 4 170 726
- US-A1- 2002 173 228
- US-A1- 2004 142 644
- US-A1- 2009 114 628
- US-A1- 2011 057 356

## Beschreibung

Die vorliegende Erfindung betrifft ein Verfahren zum Herstellen einer Führungsfase an einem Werkstück, das ein schneidendes Werkzeug ist, wobei das schneidende Werkzeug mehrere Schneidelemente aufweist.

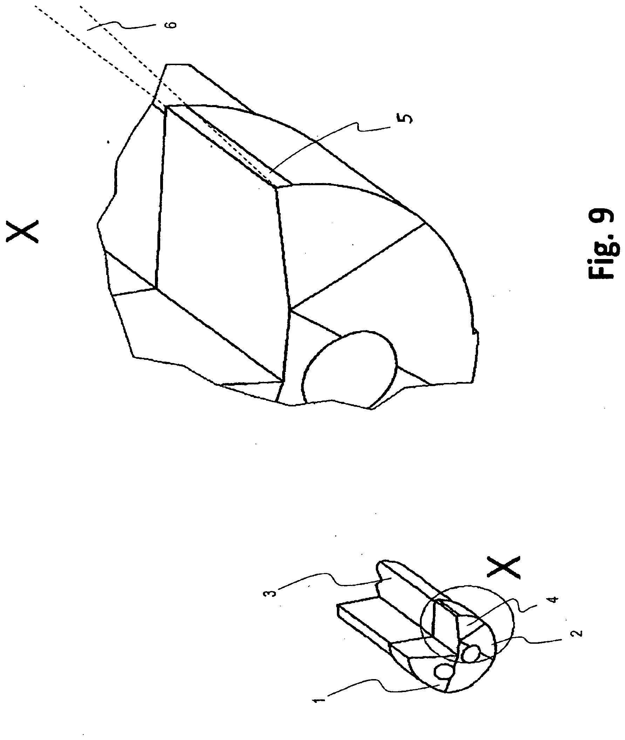

Unter einer Führungsfase, auch Rundschlifffase genannt, sind Führungsabschnitte an Werkstücken und schneidenden Werkzeugen, wie z.B. Bohr- und Fräswerkzeugen, zu verstehen. Die Führungsfasen sind für die Oberflächengüte beispielsweise einer Wandung einer Bohrung ausschlaggebend. Anders ausgedrückt, beeinflusst eine Führungsfase maßgeblich Rauheitsmesswerte wie die Rauheitstiefe, beispielsweise einer Bohrungswandung. Zur Veranschaulichung, was unter einer Führungsfase zu verstehen ist, wird auf Figur 9 verwiesen.

Figur 9 zeigt ein Tiefbohrwerkzeug mit Führungsleisten 1 und 2, einem Spanraum 3 und einer Schneide 4. In dem vergrößerten Ausschnitt gemäß Figur 9 ist die Führungsphase 5 an einer Kante der Führungsleiste 2 zu erkennen. Die Führungsphase 5 weist eine komplexe Geometrie mit einem Hinterschliff 6 auf.

Da die Führungsphase für die Oberflächengüte eines durch das schneidende Werkzeug zu bearbeitenden Werkstücks von hoher Bedeutung ist, müssen die Führungsfasen mit hoher Präzision hergestellt werden. Gerade die Fertigung der Führungsfasen mit hoher Präzision hat sich aufgrund der komplexen Geometrien der Führungsfasen mit Hinterschliffen und Hinterschneidungen in der Praxis als schwierig erwiesen.

Bisher werden Führungsfasen an Werkstücken mittels entsprechenden Rundschleifmaschinen ausgebildet. Mit einer derartigen Rundschleifmaschine sind Variationen in den Geometrien der Rundschlifffase bzw. der Führungsfase nur in sehr begrenztem Maß möglich, sodass die mit den bisherigen Verfahren hergestellten Führungsfasen zumeist zylindrisch ausgebildet werden müssen und beispielsweise keinen Freiwinkel aufweisen können.

Zur Fertigung der Führungs- bzw. Rundschlifffase wird das zu bearbeitende Werkstück in der Rundschleifmaschine aufgespannt und anschließend mit dieser bearbeitet. Da die Führungsfasen mit hoher Präzision und Maßhaltigkeit hergestellt werden müssen, sind Zwischenkontrollen, d.h. regelmäßige Kontrollmessungen, notwendig. Dazu muss das Werkstück - das später schneidende Werkzeug - ausgespannt und aus der Rundschleifmaschine entnommen werden, um in einer separaten Messvorrichtung zum Vermessen aufgespannt werden zu können. Mit anderen Worten, muss das Werkstück zur manuellen Vermessung bei Zwischen- bzw. Endkontrollen umgespannt werden. Falls weitere Schleifvorgänge notwendig sind, wird das Werkstück anschließend erneut in der Schleifmaschine aufgespannt, um den Schleifvorgang fortzusetzen. Das Umspannen des Werkstücks wirkt sich negativ auf die Maß- und Formhaltigkeit der Führungsfase aus.

Da zum Schleifen der Führungsfase eine Schleifscheibe verwendet wird, muss bei Zustellbewegungen der Schleifscheibe immer auch der Abtrag an der Schleifscheibe selbst berücksichtigt werden, was die Herstellungszeit und die Herstellungspräzision in erheblichem Maße negativ beeinflussen kann. Gerade bei langen Werkstücken, beispielsweise Reibahlen, die mit einer Führungsfase versehen werden sollen, wirkt sich zudem die durch das Schleifen mit einer Rundschleifmaschine auf das Werkstück aufgebrachte Druckkraft negativ auf die Form und Gestalt des Werkstücks aus.

Allgemein sind aus dem Stand der Technik auch Vorrichtungen zur Werkstückbearbeitung mittels Laserstrahlen bekannt und beispielsweise in dem Dokument DE 40 40 554 A1 offenbart. Die in diesem Dokument offenbarte Werkzeugmaschine umfasst ein auf einem Maschinenständer montiertes Gehäuse, in dem ein Führungsrohr längs verschiebbar angeordnet ist. Am hinteren Endteil des Gehäuses ist ein Laseraggregat montiert, dessen Laserstrahl eine Fokussieroptik durchläuft und aus einem Düsenkopf ausläuft, in welchem Zuführungen für mindestens ein Fluid zu der zentralen Austrittsöffnung des Laserstrahls vorgesehen sind. Zur Laserbearbeitung eines Werkstücks wird das Führungsrohr horizontal verlagert, bis sich ein Düsenkopf unmittelbar vor der zu bearbeitenden Werkstückfläche befindet. Durch Aktivieren des Laseraggregats erfolgt schichtweise der Abtragvorgang, wobei der Werkstücktisch eine kombinierte Horizontalbewegung sowie eine Verschwenkbewegung um eine Hochachse ausführt. Zur Durchführung von spanenden Bearbeitungsvorgängen an dem Werkstück wird der Laserkopf durch einen Werkzeugwechsler gegen ein Spanwerkzeug ausgetauscht.

Die aus dem Stand der Technik bekannte Vorrichtung zur Bearbeitung eines Werkstücks mittels Laserstrahlen ist aufgrund ihres Aufbaus zur Herstellung von Hohlräumen in massiven Werkstücken geeignet, jedoch nicht zum Ausbilden einer Führungsfase an einem Werkstück bzw. an einem schneidenden Werkzeug. Eine derartige Führungsfase ist an einer Mantelfläche des Werkstücks auszubilden und weist eine komplexe Geometrie auf, die nicht mit einem einfachen Hohlraum vergleichbar ist.

Ferner sind aus dem Stand der Technik Laserbearbeitungsvorrichtungen zur Herstellung eines rotationssymmetrischen Werkzeugs aus einem Rohling bekannt und beispielsweise in DE 10 2010 011 508 A1 offenbart.

Die Laserbearbeitungsvorrichtung gemäß DE 10 2010 011 508 A1 weist eine Steuereinrichtung und eine Positioniereinrichtung auf, über die eine Relativposition zwischen einem Laserkopf und dem Werkzeugrohling eingestellt und verändert werden kann. Über eine Ablenkeinrichtung werden die von dem Laser erzeugten Laserstrahlimpulse im Bereich einer Pulsfläche auf die Oberfläche des Rohlings ausgerichtet. Zur Herstellung der Schneidkanten oder Spannuten an dem Werkzeugrohling gibt die Steuereinrichtung der Ablenkeinrichtung eine Pulsbahn für das Anordnen aufeinanderfolgender Auftreffstellen vor. Der Verlauf der Pulsbahn hängt von der Form der Pulsfläche ab und weist bei einer rechteckigen Pulsfläche einen mäandierenden Verlauf auf, der aus geradlinigen Teilverläufen zusammengesetzt ist. Es sind auch Pulsflächen mit runder, elliptischer oder gekrümmter Form möglich. Ausgehend von einem Startpunkt werden die Laserstrahlimpulse entlang der Pulsbahn platziert, bis ein Endpunkt der Pulsbahn erreicht wird. Nach dem Erreichen des Endpunkts findet eine Rückstellbewegung in der Ablenkeinrichtung statt und die Laserstrahlimpulse werden anschließend erneut beginnend beim Startpunkt auf der Pulsbahn platziert, so dass ein schichtweiser Materialabtrag erfolgt. Während über die Ablenkeinrichtung eine zweidimensionale, räumlich begrenzte Pulsfläche bearbeitet wird, veranlasst die Positioniereinrichtung gleichzeitig eine Relativbewegung der Pulsfläche auf der Oberfläche des Rohlings. Zur Herstellung einer Spannut oder einer Schneidkante an dem Rohling wird das Material in mehreren Abtragschichten über die Verschiebung der Pulsfläche über die Oberfläche des Rohlings schichtweise entfernt, so dass sich nach einem erheblichen Materialabtrag die gewünschte Spannut bildet.

Bei der in dem Dokument DE 10 2010 011 508 A1 offenbarten Laserbearbeitungsvorrichtung wird das Material in mehreren Abtragungsschichten durch die Verschiebung der Pulsfläche über die Oberfläche des Rohlings schichtweise entfernt. Dabei folgen die Laserstrahlimpulse dem Verlauf einer vorgegebenen Pulsbahn. Nach Erreichen eines Endpunkts der Pulsbahn findet eine Rückstellbewegung statt, und die nächste abzutragende Materialschicht wird ausgehend vom Startpunkt der Pulsbahn abgetragen.

Die in diesem Dokument offenbarte Laserbearbeitungsvorrichtung trägt schichtweise über wiederholtes Abfahren einer vorgegebenen Pulsbahn Material ab und bearbeitet jeweils immer denselben vorgegebenen Bereich - einen Bereich einer Spannut oder einer Schneidkante - an dem Werkstück bis zu dessen Fertigstellung.

Es ist eine Aufgabe der vorliegenden Erfindung, ein Verfahren zum Herstellen einer Führungsfase an einem Werkstück bereitzustellen, mit dem verschiedenartige Werkstücke schnell und mit hoher Präzision mit einer Führungsfase versehen werden können.

Diese Aufgabe wird durch ein Verfahren zum Herstellen einer Führungsfase an einem Werkstück mit den Merkmalen gemäß Anspruch 1 gelöst.

Bevorzugte Varianten des erfindungsgemäßen Verfahrens ergeben sich jeweils aus den abhängigen Ansprüchen.

Bei dem erfindungsgemäßen Verfahren wird das zu bearbeitende Werkstück in einer um eine Drehachse drehangetriebenen Aufspannvorrichtung aufgespannt. Wenigstens eine Lasereinheit ist zum Bearbeiten des in der Aufspannvorrichtung aufgespannten Werkstücks vorgesehen. Die Lasereinheit ist dabei von einem Typ, der zur materialabtragenden Bearbeitung des Werkstücks geeignet ist. Die Aufspannvorrichtung und die Lasereinheit sind mittels wenigstens einer CNC-gesteuerten Achse relativ zueinander verlagerbar.

Sowohl die Lasereinheit als auch die Aufspannvorrichtung werden zur Herstellung der Führungsfase derart gesteuert, dass das Werkstück in der Aufspannvorrichtung kontinuierlich um die Drehachse der Aufspannvorrichtung verdreht wird, während die Lasereinheit und die Aufspannvorrichtung zumindest um eine vorbestimmte Distanz relativ zueinander verlagert werden, um zum Herstellen der Führungsfase Material an dem Werkstück abzutragen.

Anders ausgedrückt, wird das Werkstück in der Aufspannvorrichtung um die Drehachse der Aufspannvorrichtung verdreht, während die Lasereinheit und die Aufspannvorrichtung um eine vorbestimmte Distanz, d. h. den Zustellbetrag, in wenigstens einer Achsrichtung der wenigstens einen CNC-gesteuerten Achse relativ zueinander verlagert werden, um Material in einem vorbestimmten Umfang an dem Werkstück abzutragen. Der Materialabtrag wird durch die Relativbewegung zwischen Aufspannvorrichtung und Lasereinheit und/oder die Verdrehung des Werkstücks um die Drehachse bestimmt. Der Materialabtrag wird erfindungsgemäß unter anderem durch das Hineinführen der zu bearbeitenden Bereiche der Schneidelemente in den von der Lasereinheit erzeugten Laserstrahl erreicht. Dabei ist es aufgrund der kontinuierlichen Verdrehung möglich, mehrere zu bearbeitende Bereiche der Schneidelemente aufeinanderfolgend in den Laserstrahl hineinzuführen, so dass der Laserstrahl an den Schneidelementen zum Materialabtrag angreifen kann.

Erfindungsgemäß werden die Schneidelemente des schneidenden Werkzeugs aufgrund der kontinuierlichen Verdrehung des Werkstücks um die Drehachse der Aufspannvorrichtung in den Laserstrahl hineingeführt, so dass der Laserstrahl die Bereiche der Schneidelemente aufeinanderfolgend bearbeiten kann, an denen die Führungsfase herzustellen ist. Zumeist handelt es sich dabei um eine radial äußere Fläche an einem Schneidelement.

Hieraus wird ersichtlich, dass mit dem erfindungsgemäßen Verfahren, anders als beim Stand der Technik gemäß DE 10 2010 011 508 A1 kein wiederholtes Abfahren einer vorgegebenen Pulsbahn notwendig ist, um schichtweise Material an dem Werkstück abzutragen. Bei dem erfindungsgemäßen Verfahren werden die zu bearbeitenden Bereiche unter einer kontinuierlichen Verdrehung des Werkzeugs und einer Relativbewegung zwischen Lasereinheit und Aufspannvorrichtung in den Laserstrahl hineingeführt.

Durch die Relativbewegung der Aufspannvorrichtung und der Lasereinheit relativ zueinander und der gleichzeitig stattfindenden Verdrehung des Werkstücks in der Aufspannvorrichtung sind komplexe Bewegungsmuster der Lasereinheit und der Aufspannvorrichtung relativ zueinander möglich. Durch diese Bewegungsmuster können auch komplexe Geometrien einer Führungsfase mit Hinterschliffen, Hinterschneidungen und Freiwinkeln erzeugt werden.

Anders als beim Stand der Technik können mit dem erfindungsgemäßen Verfahren unerwünschte Einflüsse der verwendeten Werkzeuge, wie etwa der Schleifscheiben, vollständig eliminiert werden, da die Führungsfase an dem Werkstück durch den von der Lasereinheit emittierten Laserstrahl ausgebildet wird, ohne dass eine Kraft auf das Werkstück ausgeübt wird. Dadurch können insbesondere auch sehr dünne und lange Werkstücke ohne Deformationen mit einer Führungsphase versehen werden.

Die Aufspannvorrichtung wird während der Herstellung der Führungsfase derart gesteuert und angetrieben, dass das Werkstück in der Aufspannvorrichtung kontinuierlich um die Drehachse rotiert. Denkbar ist hier beispielsweise eine Rotation des Werkstücks um die Drehachse mit einer Drehzahl von größer 20 U/min.

Zur Vermessung des Werkstücks in der Aufspannvorrichtung ist eine Messeinrichtung vorgesehen, mit der an dem Werkstück in der Aufspannvorrichtung Messungen durchgeführt werden können. Die Zwischenkontrollen und auch die Endkontrollen können mit dem erfindungsgemäßen Verfahren in derselben Aufspannvorrichtung vorgenommen werden, in der auch die Bearbeitung des Werkstücks stattfindet. Damit entfällt das beim Stand der Technik notwendige Umspannen des Werkstücks zur Vermessung. Durch den Wegfall des Umspannens des Werkstücks kann die Präzision bei der Herstellung der Führungsfase deutlich erhöht werden kann.

Nach der Endkontrolle eines Werkstücks, d. h. nach der Bearbeitung und der Vermessung des Werkstücks, kann der Wechsel zu einem neuen unbearbeiteten Werkstück automatisiert ablaufen. Der Werkstückwechsel kann somit automatisiert von Robotern oder Handhabungseinrichtungen vorgenommen werden, nachdem die Endkontrolle bzw. die abschließende Vermessung des Werkstücks durchgeführt wurde.

Demnach können sowohl der Messvorgang als auch der Werkstückwechsel automatisiert ausgeführt werden. Wie erwähnt, können auch eventuell notwendige Zwischenmessungen zur Kontrolle und gegebenenfalls Korrekturen automatisiert durchgeführt werden. Mit den durch das erfindungsgemäße Verfahren ermöglichten, automatisierten Arbeitsvorgängen kann ein komplexes Werkstück bzw. ein schneidendes Werkzeug mannlos produziert werden möglich. Das erfindungsgemäße Verfahren trägt somit wesentlich zur Erhöhung der Produktivität und der Wirtschaftlichkeit bei.

Aufgrund der Steuerung der Aufspannvorrichtung und der Lasereinheit sowie der automatisierten Vermessung des Werkstücks können auch maschineninteme Komponenten und Maschinenelemente selbstständig überwacht werden. Dadurch können Ungenauigkeiten, die beispielsweise vom Verschleiß an einzelnen Maschinenelementen herrühren, selbstständig festgestellt werden. Mit der Steuerung gemäß dem Verfahren der vorliegenden Erfindung wird eine Art Selbstkontrolle einer der das Verfahren ausführenden Maschine erreicht.

Es werden mit dem erfindungsgemäßen Verfahren schneidende Werkzeuge bearbeitet. Schneidende Werkzeuge können mit gewendelten und/oder in axialer Richtung gerade verlaufenden Schneiden versehen sein. Je nach Ausprägung der Schneiden des schneidenden Werkzeugs erhöht sich die Komplexität der Fertigung der Führungsfasen. Häufig weisen schneidende Werkzeuge auch auswechselbare Schneiden auf. Die Aufspannvorrichtung und die Lasereinheit werden derart gesteuert, dass die Lasereinheit an einzelnen Schneidelementen des schneidenden Werkzeugs nacheinander Material abträgt. Anders ausgedrückt werden die Schneidelemente des zu bearbeitenden Werkzeugs aufgrund der kontinuierlichen Verdrehung aufeinanderfolgend durch den von der Lasereinheit erzeugten Laserstrahl zum Abtragen von Material hindurchgeführt.

Das Werkstück kann in der Aufspannvorrichtung auf verschiedene Arten aufgespannt werden. Denkbar sind hier drei Varianten. Das Werkstück kann einerseits fliegend (horizontal) oder hängend bzw. stehend (vertikal) in der Aufspannvorrichtung aufgespannt werden.

Andererseits kann es insbesondere bei längeren und dünnen Werkstücken erforderlich sein, das Werkstück mit einem axialen Ende in der Aufspannvorrichtung aufzuspannen und das Werkstück mit seinem jeweils anderen axialen Ende gegenzulagern, beispielsweise mit einer Gegenspitze in Eingriff zu bringen.

Die Gegenspitze kann dabei derart gesteuert und ausgebildet sein, dass das Werkstück nach Beendigung der Bearbeitung von der Gegenspitze freigegeben wird, sodass ein neues Werkstück eingewechselt werden kann. Zum Freigeben bzw. in Eingriff bringen kann die Gegenspitze bzw. eine die Gegenspitze antreibende Aufnahmevorrichtung in Richtung der Längsachse des Werkstücks angetrieben werden. Denkbar ist hier, dass die antreibbare Gegenspitze bzw. die Aufnahmevorrichtung für die Gegenspitze mit der Steuerung der Aufspannvorrichtung und der Lasereinheit verbunden ist.

Die Gegenspitze kann auch derart gesteuert werden, dass eine maximal zulässige Haltekraft, die zum Halten des Werkstücks von der Gegenspitze auf das Werkstück ausgeübt wird, nicht überschritten wird. Dabei wird die maximal zulässige Haltekraft nach Maßgabe der Dimensionen des Werkstücks berechnet. Bei der Berechnung der maximal zulässigen Haltekraft, die die Gegenspitze auf das Werkstück ausübt, werden neben der Länge und dem Durchmesser des Werkstücks auch die Gestalt und der Werkstoff des Werkstücks berücksichtigt, um Deformationen und insbesondere Verbiegungen in radialer Richtung an dem Werkstück zu vermeiden, die aufgrund einer zu hohen Haltekraft entstehen können.

Der von der Lasereinheit erzeugte Laserstrahl kann zu seiner Führung bzw. zu einer genaueren Bestrahlung des Werkstücks in einen Wasserstrahl eingebettet werden. Dabei wirkt der Wasserstrahl beispielsweise als Lichtleiter für den Laserstrahl.

Wie voranstehend erwähnt, führen die Lasereinheit und die Aufspannvorrichtung zum Abtragen von Material an den Schneidelementen des schneidenden Werkzeugs eine Relativbewegung zumindest um eine vorbestimmte Distanz relativ zueinander aus. Bei bestimmten Geometrien der Führungsfase bzw. der Rundschlifffase kann es notwendig sein, dass die vorbestimmte Distanz der Relativbewegung nicht an einem Stück ausgeführt wird, sondern in einzelne Teildistanzen unterteilt wird. Mit anderen Worten findet eine Verdrehung bzw. Rotation des Werkstücks in der Aufspannvorrichtung statt und gleichzeitig wird in bestimmten Intervallen, je nach Notwendigkeit bzw. Größe des Materialabtrags an den Schneidelementen des schneidenden Werkzeugs, eine Relativbewegung um eine Teildistanz der vorbestimmten Distanz ausgeführt. Die Relativbewegung kann demnach in einzelnen Schritten ausgeführt werden, die von dem Materialabnahmebetrag an den Schneidelementen des schneidenden Werkzeugs bestimmt werden.

Um die Lasereinheit und/oder die Aufspannvorrichtung in verschiedenen Richtungen verfahren zu können, werden die Lasereinheit und/oder die Aufspannvorrichtung mittels wenigstens vier CNC-gesteuerten Achsen verlagert. Beispielsweise können die Lasereinheit und/oder die Aufspannvorrichtung wenigstens in Richtung einer X-, Y-, Z-Achse relativ zueinander verfahren und gleichzeitig um eine oder mehrere der X-, Y-, Z-Achse verschwenkt werden. Mit dem erfindungsgemäßen Verfahren können somit sämtliche Flächen eines Werkstücks, d.h. radiale und axiale Flächen, bzw. einzelne Punkte an diesen Flächen bearbeitet werden.

Im Folgenden wird ein Ausführungsbeispiel der vorliegenden Erfindung mit Bezug auf die beigefügten Figuren beschrieben, in denen:
- Fig. 1:: eine perspektivische Ansicht eines zu bearbeitenden, schneidenden Werkzeugs zeigt;
- Fig. 2:: eine Vorderansicht dieses zu bearbeitenden, schneidenden Werkzeugs zeigt;
- Fig. 3:: einen vergrößerten Ausschnitt aus Fig. 2 zeigt;
- Fig. 4:: eine perspektivische Ansicht eines Schneidelements des schneidenden Werkzeugs gemäß den Fig. 1 und 2 zeigt;
- Fig. 5 bis 8:: schematische, perspektivische Ansichten von Bearbeitungssituationen des Werkzeugs mit einem Laser gemäß dem erfindungsgemäßen Verfahren zeigen; und
- Fig. 9:: eine Figur zum allgemeinen Verständnis der Erfindung zeigt.

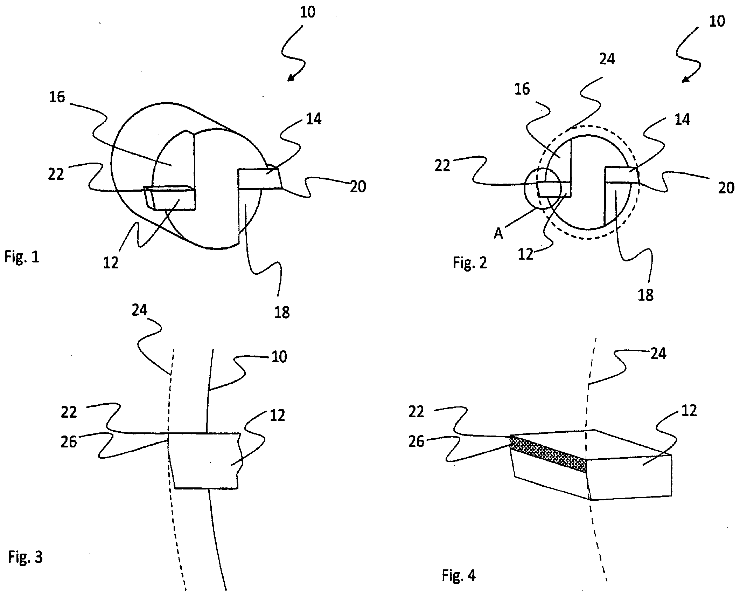

Fig. 1 zeigt eine perspektivische Ansicht eines Ausführungsbeispiels eines Werkzeugs, das als Werkstück mit dem erfindungsgemäßen Verfahren zum Herstellen einer Führungsfase bearbeitet wird. Anhand von Fig. 1 und auch der Figuren 2 bis 4 soll verdeutlicht werden, was unter einer Führungsfase bzw. Rundschlifffase zu verstehen ist, die mit dem erfindungsgemäßen Verfahren an einem schneidenden Werkzeug hergestellt werden soll. Ferner wird hierzu auf die eingangs getroffenen Erläuterungen zu Fig. 9 verwiesen.

Das schneidende Werkzeug 10 weist Schneidelemente 12 und 14 auf, die in entsprechenden Ausnehmungen 16 und 18 in dem Werkzeug 10 aufgenommen und fixiert sind, beispielsweise durch Einlöten. Die Schneidelemente 12 und 14 umfassen jeweils eine Schneidkante 20 und 22. Die Schneidkanten 20, 22 liegen in einem Bereich der Schneidelemente 12 und 14, der über den Außenumfang des Werkzeugs 10 radial nach außen ragt.

Fig. 2 zeigt eine Vorderansicht des Werkzeugs 10. Man erkennt in Fig. 2 wiederum die Schneidelemente 12 und 14 mit ihren jeweiligen Schneidkanten 20 und 22. Die Schneidkanten 20 und 22 der Schneidelemente 12 und 14 liegen auf dem Radius eines gedachten Kreises 24.

Fig. 3 zeigt eine vergrößerte Ansicht des Ausschnitts A aus Fig. 2. In Fig. 3 erkennt man abschnittsweise das Werkzeug 10 sowie einen Abschnitt des Schneidelements 12 mit seiner Schneidkante 20. Ebenso ist ein Abschnitt des gedachten Kreises 24 mit vorbestimmtem Radius gezeigt. Im Bereich des Schneidelements 12 nach der Schneidkante 20 erstreckt sich der Bereich 26 an der radialen Außenfläche des Schneidelements 12. Im Bereich 26 soll mit dem erfindungsgemäßen Verfahren eine Führungsfase ausgebildet werden. Der Bereich 26 der Führungsfase liegt auf demselben Radius des gedachten Kreises 24 wie die Schneidkante 20. Unterhalb der Führungsfase ist mit dem abgeschrägten Abschnitt ein Freiwinkel vorgesehen.

Fig. 4 zeigt eine perspektivische Ansicht des Schneidelements 12. In Fig. 4 ist der Bereich 26, der der Führungsfase entspricht, zur Verdeutlichung grau hinterlegt. Der Bereich 26 der Führungsfase erstreckt sich ausgehend von der Schneidkante 20 über einen vorbestimmten Abschnitt der radialen Außenfläche des Schneidelements 12. Mit der Führungsfase bzw. Rundschlifffase 26 wird maßgeblich die Oberflächengüte d.h. unter anderem die Oberflächenrauigkeit beispielsweise einer Bohrungswandung beeinflusst.

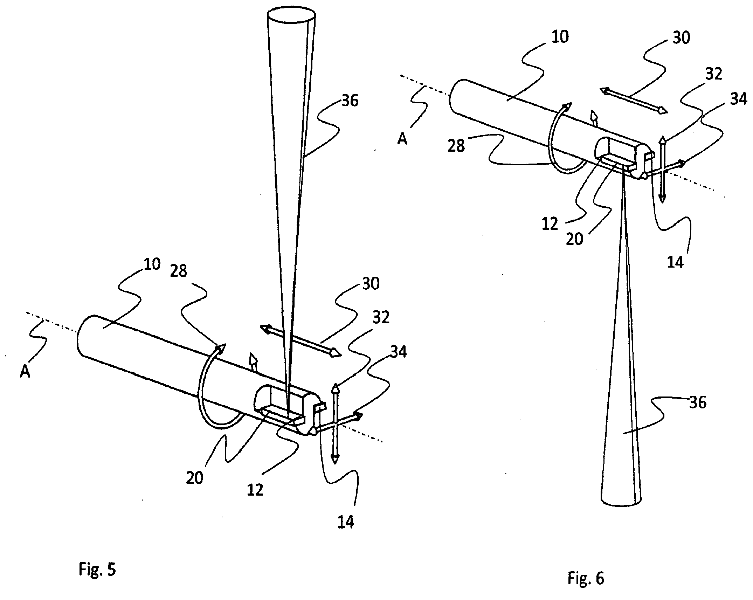

Fig. 5 zeigt eine schematische, perspektivische Ansicht einer Bearbeitungssituation eines in den Figuren 1 bis 4 gezeigten Werkstücks mit dem erfindungsgemäßen Verfahren.

Das Werkzeug 10 ist dabei als Werkstück in einer nicht gezeigten Aufspannvorrichtung aufgespannt und kann um eine Drehachse A der Aufspannvorrichtung in Richtung des Pfeils 28 kontinuierlich verdreht werden. Zudem kann das Werkzeug 10 über die antreibbare Aufspanneinheit zumindest in den Richtungen der Pfeile 30, 32, 34 (X-, Y-, Z-Richtung) relativ zu dem Laserstrahl 36 verlagert werden. Ferner kann auch eine nicht gezeigt Lasereinheit, die den schematisch angedeuteten Laserstrahl 36 erzeugt, in den Richtungen der Pfeile 30, 32, 34 relativ zu dem Werkzeug 10 verlagert werden. Anders ausgedrückt, kann eine Relativbewegung zwischen dem Werkzeug 10 in der Aufspannvorrichtung (nicht gezeigt) und dem von einer nicht gezeigten Lasereinheit erzeugten Laserstrahl 36 ausgeführt werden, während das Werkzeug 10 kontinuierlich rotiert.

Zur Herstellung der Führungsfase bzw. Rundschlifffase an einem der Schneidelemente 12 und 14 in einem Bereich 26 (Fign. 3 und 4) nach der Schneidkante 20 wird das Werkzeug 10 kontinuierlich um die Drehachse der Aufspannvorrichtung verdreht und rotiert beispielsweise mit einer Drehzahl von größer 20 U/min oder wird geschwenkt. Durch die kontinuierliche Rotation des Werkzeugs 10 werden die Schneidelemente 12 und 14 nacheinander durch den Laserstrahl 36 hindurchgeführt, wobei der Laserstrahl 36 Material an dem Bereich 26 abträgt, um die Führungsfasen ausbilden zu können. Die Schneidelemente 12 und 14, die auf demselben Radius liegen (Fig. 2), durchlaufen somit in Folge der Drehung den Laserstrahl 36, der aufeinanderfolgen zur Herstellung der Führungsfasen an den Schneidelemente 12 und 14 angreift.

Zusätzlich zu der kontinuierlichen Rotation des Werkzeugs 10 können entweder das Werkzeug 10 über die Aufspannvorrichtung (nicht gezeigt) und auch die den Laserstrahl 36 erzeugende Lasereinheit (nicht gezeigt) zumindest in den Richtungen der Pfeile 30, 32, 34 relativ zueinander verfahren werden. Durch die Relativbewegung der Lasereinheit und der Aufspanneinrichtung wird erreicht, dass der Laserstrahl 36 aus unterschiedlichen Winkeln und Position an dem zu bearbeitenden Schneidelement 12 und 14 angreifen kann. Anders ausgedrückt, wird das Werkzeug 10 kontinuierlich um die Drehachse verdreht, während durch eine Relativbewegung zwischen dem Laser 36 und dem Werkzeug 10 der Laser 34 an dem Bereich 26 (Fign. 3 und 4) der Schneidelemente 12 und 14 zur Herstellung der Führungsfasen entlang geführt wird. Dabei erfolgt der Antrieb der Aufspannvorrichtung und der Lasereinheit bevorzugt über eine oder mehrere CNC-gesteuerte Achsen.

Aufgrund der kontinuierlichen Rotation des Werkzeugs um seine Drehachse greift der Laserstrahl im Wesentlichen tangential an dem zu bearbeitenden Bereich 26 (Fign. 3 und 4) der Schneidelemente 12 und 14 an, was gerade bei Werkzeugen mit mehreren Schneidelementen 12 und 14 bzw. Schneiden zu einer schnellen und aufeinanderfolgenden Erzeugung der für eine Führungsfase benötigten Geometrien an den einzelnen Schneidelementen 12 und 14 beiträgt.

Es ist selbstverständlich, dass mit dem erfindungsgemäßen Verfahren auch Werkzeuge mit mehr als zwei Schneidelementen bearbeitet werden können.

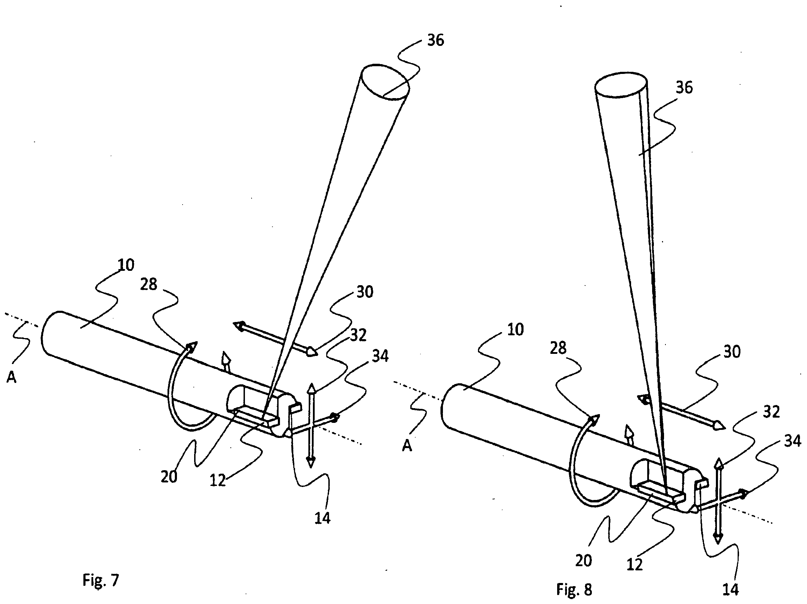

Die Figuren 6 bis 8 entsprechen weitestgehend der Fig. 4, zeigen jedoch, dass eine Relativbewegung zwischen der Aufspanneinrichtung und der Lasereinheit möglich ist und der Laserstrahl auch mit verschiedenen Winkeln auf den zu bearbeitenden Bereich auf das Werkstück auftreffen kann.

In den Figuren 5 bis 8 erkennt man neben den unterschiedlichen Möglichkeiten, den Laserstrahl 36 an das Werkstück (Werkzeug) 10 heranzuführen, zusätzlich, dass der Laserstrahl 36 immer von einem Kegel repräsentiert ist. Dadurch wird einerseits die Fokussierung des Laserstrahls auf die Bearbeitungsstelle, andererseits aber auch die Möglichkeit angezeigt, dass der Laserstrahl eine rotierende Bewegung ausführen kann.
Zusammenfassend ist festzustellen, dass sich mit der Erfindung eine deutlich verbesserte Möglichkeit zur Bewältigung der relativ schwierigen Aufgabe der Erstellung einer Rundschlifffase an einem Werkzeug ergibt. Insbesondere bei immer komplizierter werdenden Werkzeuggeometrien, wie sie für die zeitsparende Bearbeitung komplexer Werkstückgeometrien erforderlich sind, bietet die vorliegende Erfindung erhebliche Vorteile.

## Patentansprüche

1. Verfahren zum Herstellen einer Führungsfase (26) an einem Werkstück (10), das ein schneidendes Werkzeug ist, wobei das Werkzeug mehrere Schneidelemente (12, 14) aufweist,
wobei das zu bearbeitende Werkstück (10) in einer um eine Drehachse (A) drehangetriebenen Aufspannvorrichtung aufgespannt und wenigstens eine Lasereinheit vorgesehen ist, wobei die Aufspannvorrichtung und die Lasereinheit mittels wenigstens einer CNC-gesteuerten Achse relativ zueinander verlagerbar sind, und wobei die Lasereinheit von einem Typ ist, der zur materialabtragenden Bearbeitung des Werkstücks geeignet ist, und wobei zur Herstellung der Führungsfase (26) die Lasereinheit und die Aufspannvorrichtung derart gesteuert werden, dass das Werkstück (10) in der Aufspannvorrichtung um die Drehachse der Aufspannvorrichtung rotiert, während die Lasereinheit und die Aufspannvorrichtung gleichzeitig zumindest um eine vorbestimmte Distanz relativ zueinander verlagert werden, um zum Herstellen der Führungsfase (26) Material an den Schneidelementen (12, 14) abzutragen, wobei sich der Bereich der Führungsfase (26) ausgehend von der Schneidkante über einen vorbestimmten Abschnitt der radialen Außenfläche der Schneidelemente erstreckt, wobei die Lasereinheit mit einem Laserstrahl (36) Material in diesem Bereich abträgt, um die Führungsfase an den radialen Außenflächen der Schneidelemente auszubilden, wobei der Laserstrahl (36) an diesem Bereich zur Ausbildung der Führungsfase (26) tangential angreift, wobei durch die kontinuierliche Rotation des Werkstücks (10) in der Aufspannvorrichtung die Bereiche der Schneidelemente, in denen eine Führungsfase (26) ausgebildet werden soll, aufeinanderfolgend in den Laserstrahl (36) hineingeführt werden, sodass der Laserstrahl zum Materialabtrag an diesen Bereichen der Schneidelemente angreifen kann.

2. Verfahren nach Anspruch 1,
wobei eine Messeinrichtung vorgesehen ist, mit der an dem Werkstück (10) in der Aufspannvorrichtung Messungen durchgeführt werden.

3. Verfahren nach Anspruch 2,
wobei nach der Bearbeitung und der Vermessung eines Werkstücks (10) der Wechsel zu einem neuen, unbearbeiteten Werkstück (10) automatisiert vorgenommen wird.

4. Verfahren nach einem der Ansprüche 1 bis 3, wobei das Werkstück (10) in der Aufspannvorrichtung fliegend aufgespannt ist.

5. Verfahren nach einem der Ansprüche 1 bis 3,
wobei das Werkstück (10) mit einem axialen Ende in der Aufspannvorrichtung aufspannt ist, und mit seinem anderen axialen Ende mit einer Gegenspitze in Eingriff steht.

6. Verfahren nach einem der Ansprüche 1 bis 3,
wobei das Werkstück (10) hängend oder stehend in der Aufspannvorrichtung aufgespannt wird.

7. Verfahren nach Anspruch 5,
wobei die Gegenspitze derart gesteuert wird, dass das Werkstück (10) nach Beendigung der Bearbeitung eines Werkstücks (10) von der Gegenspitze freigeben wird, so dass ein neues Werkstück (10) eingewechselt werden kann.

8. Verfahren nach einem der Ansprüche 5 oder 7,
wobei die Gegenspitze derart gesteuert wird, dass eine maximal zulässige axiale Haltekraft, die von der Gegenspitze auf das Werkstück ausgeübt wird, nicht überschritten wird, wobei die maximal zulässige axiale Haltekraft nach Maßgabe der Dimensionen des Werkstücks berechnet wird.

9. Verfahren nach einem der Ansprüche 1 bis 8,
wobei der von der Lasereinheit erzeugte Laserstrahl (36) zu seiner Führung in einen Wasserstrahl eingebettet wird.

10. Verfahren nach einem der Ansprüche 1 bis 9,
wobei die vorbestimmte Distanz, um die sich die Lasereinheit und die Aufspannvorrichtung relativ zueinander verlagern, in eine Mehrzahl von Teildistanzen unterteilt wird.

11. Verfahren nach einem der Ansprüche 1 bis 10,
wobei die Lasereinheit und/oder Aufspannvorrichtung mittels wenigstens vier CNC-gesteuerten Achsen verlagert wird.

## Claims

1. Method for producing a margin (26) on a workpiece (10) that is a cutting tool, wherein the workpiece comprises a plurality of cutting elements (12, 14),
wherein the workpiece (10) to be machined is clamped in a clamping device which is rotationally driven about a rotational axis (A), and at least one laser unit is provided, wherein the clamping device and the laser unit can be moved relative to each other by means of at least one CNC-controlled axis, and wherein the laser unit is of a type that is suitable for machining the workpiece by removing material, and wherein in order to produce the margin (26), the laser unit and the clamping device are controlled such that the workpiece (10) in the clamping device is rotated about the rotational axis of the clamping device while at the same time the laser unit and the clamping device are moved relative to each other at least by a specified distance in order to remove material from the workpiece (10) so as to produce the margin (26), wherein the area of the margin (26) extends from the cutting edge over a predetermined portion of the radial outer surface of the cutting elements, wherein the laser unit with the laser beam (36) removes material in said area, in order to produce the margin at the radial outer surfaces of the cutting elements, wherein the laser beam (36) is directed tangentially on said area for producing the margin, wherein by means of the continuous rotation of the workpiece (10) in the clamping device the areas of the cutting elements, in which the margin (26) is to be produced, are subsequently moved into the laser beam (36) so that the laser beam is directed on those portions for removing material.

2. Method according to Claim 1,
wherein a measuring device is provided, with which measurements are carried out on the workpiece (10) in the clamping device.

3. Method according to Claim 2,
wherein, following the machining and the measurement of a workpiece (10), the change to a new, unmachined workpiece (10) is performed in an automated manner.

4. Method according to one of Claims 1 to 3,
wherein the workpiece (10) is clamped, unsupported, in the clamping device.

5. Method according to one of Claims 1 to 3,
wherein the workpiece (10) is clamped by one axial end in the clamping device, and is engaged by its other axial end with a tail centre.

6. Method according to one of Claims 1 to 3,
wherein the workpiece (10) is clamped, suspended or upright, in the clamping device.

7. Method according to Claim 5,
wherein the tail centre is controlled such that the workpiece (10) is released from the tail centre after completion of the machining of the workpiece (10), so that a new workpiece (10) can be introduced.

8. Method according to one of Claims 5 or 7,
wherein the tail centre is controlled such that a maximum-permissible axial holding force which is exerted on the workpiece by the tail centre is not exceeded, the maximum-permissible axial holding force being calculated in accordance with the dimensions of the workpiece.

9. Method according to one of Claims 1 to 8,
wherein the laser beam (36) produced by the laser unit is embedded, for its guidance, in a water jet.

10. Method according to one of Claims 1 to 9,
wherein the specified distance by which the laser unit and the clamping device can move relative to each other is subdivided into a plurality of partial distances.

11. Method according to one of Claims 1 to 10,
wherein the laser unit and/or clamping device is moved by means of at least four CNC-controlled axes.

## Revendications

1. Procédé pour produire un chanfrein de guidage (26) sur une pièce (10) qui constitue un outil coupant, cet outil coupant présentant plusieurs éléments coupants (12, 14),
la pièce (10) à usiner étant serrée dans un dispositif de serrage entraîné en rotation autour d'un axe de rotation (A) et au moins une unité laser étant prévue, le dispositif de serrage et l'unité laser pouvant être déplacés l'un par rapport à l'autre à l'aide d'au moins un axe à commande CNC, et l'unité laser étant conçue de manière à pouvoir réaliser un usinage de la pièce par enlèvement de matière, et l'unité laser et le dispositif de serrage étant commandés de sorte que, pour réaliser le chanfrein de guidage (26), la pièce (10) serrée dans le dispositif de serrage tourne autour de l'axe de rotation du dispositif de serrage tandis que l'unité laser et le dispositif de serrage sont simultanément déplacés l'un par rapport d'au moins une distance prédéfinie pour enlever de la matière sur les éléments coupants (12, 14) afin de réaliser ledit chanfrein de guidage (26), la partie du chanfrein de guidage (26) s'étendant, partant de l'arête coupante, sur une portion prédéterminée de la surface extérieure radiale des éléments coupants, l'unité laser procédant au moyen d'un rayon laser (36) à l'enlèvement de matière dans cette partie pour réaliser le chanfrein de guidage sur les surfaces extérieures radiales des éléments coupants, le rayon laser (36) intervenant de manière tangentielle sur cette partie pour réaliser le chanfrein de guidage (26), les parties des éléments coupants dans lesquels doit être réalisé un chanfrein de guidage (26) passant successivement dans le rayon laser (36) du fait de la rotation continue de la pièce (10) montée dans le dispositif de serrage de telle sorte que le rayon laser est en mesure d'intervenir sur lesdites parties des éléments coupants pour procéder à l'enlèvement de matière.

2. Procédé selon la revendication 1,
un dispositif de mesure étant prévu pour effectuer des mesures sur la pièce (10) serrée dans le dispositif de serrage.

3. Procédé selon la revendication 2,
le changement de pièce opéré après l'usinage et le mesurage d'une pièce (10) pour l'usinage d'une nouvelle pièce se faisant automatiquement.

4. Procédé selon l'une des revendications 1 à 3,
la pièce (10) étant montée en porte à faux dans le dispositif de serrage.

5. Procédé selon l'une des revendications 1 à 3,
la pièce (10) étant serrée dans le dispositif de serrage par le bais d'une de ses extrémités axiales, l'autre extrémité axiale étant en prise avec une contre-pointe.

6. Procédé selon l'une des revendications 1 à 3,
la pièce (10) étant montée suspendue ou en position verticale dans le dispositif de serrage.

7. Procédé selon la revendication 5,
la contre-pointe étant commandée de sorte que la pièce (10) est libérée de la contre-pointe en fin d'opération d'usinage pour changer de pièce et procéder à l'usinage d'une nouvelle pièce (10).

8. Procédé selon l'une des revendications 5 ou 7,
la contre-pointe étant commandée de sorte à ne pas dépasser une force de maintien axiale maximale admissible exercée sur la pièce par la contre-pointe, cette force de maintien axiale maximale admissible étant calculée en fonction des dimensions de la pièce.

9. Procédé selon l'une des revendications 1 à 8,
le rayon laser (36) généré par l'unité laser étant, pour son guidage, incorporé dans un jet d'eau (36).

10. Procédé selon l'une des revendications 1 à 9,
la distance prédéterminée du déplacement de l'unité laser par rapport au dispositif de serrage étant subdivisée en une pluralité de distances partielles.

11. Procédé selon l'une des revendications 1 à 10,
l'unité laser et/ou le dispositif de serrage étant déplacés à l'aide d'au moins quatre axes à commande CNC.
